# EUROPEAN PATENT SPECIFICATION

(11) **EP 3 100 539 B1**
(45) Date of publication and mention of the grant of the patent: **18.03.2020**
(21) Application number: 15704615.2
(22) Date of filing: 28.01.2015
(51) Int. Cl.: H04W 56/00

(54) **MONITORING SYNCHRONIZATION SIGNALS IN DEVICE-TO-DEVICE COMMUNICATION**
MONITORING VON SYNCHRONISATIONSSIGNALEN IN EINEM GERÄT-ZU-GERÄT-KOMMUNIKATION
SURVEILLER LES SIGNAUX DE SYNCHRONISATION DANS UN APPAREIL-DE-APPAREIL COMMUNICATION

(30) Priority: 31.01.2014 US 201461934279 P
(43) Date of publication of application: 07.12.2016
(73) Proprietor: Telefonaktiebolaget LM Ericsson (publ), 164 83 Stockholm (SE)
(72) Inventor: LINDOFF, Bengt, S-237 35 Bjärred (SE); GUNNARSSON, Fredrik, S-587 50 Linköping (SE); LU, Qianxi, Beijing 100102 (CN); SORRENTINO, Stefano, S-171 68 Solna (SE)
(74) Representative: Zacco Sweden AB
(86) International application number: PCT/SE2015/050083
(87) International publication number: WO 2015/115974

(56) References cited:
- US-A1- 2013 077 512
- QUALCOMM INCORPORATED: "Multi-hop D2D synchronization performance", 3GPP DRAFT; R1-135316_QC_D2D_SYNC_MULTIHOP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735001, Retrieved from the Internet: URL:http://www.3gpp.org/ftp/Meetings_3GPP_ SYNC/RAN/RAN1/Docs/ [retrieved on 2013-11-13]
- INTEL CORPORATION: "Discussion on D2D Synchronization", 3GPP DRAFT; R1-135113 INTEL - D2D SYNC - GENERAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050734815, Retrieved from the Internet: URL:http://www.3gpp.org/ftp/Meetings_3GPP_ SYNC/RAN/RAN1/Docs/ [retrieved on 2013-11-13]
- BROADCOM CORPORATION: "Synchronization Design for D2D communication", 3GPP DRAFT; R1-135542 D2D SYNCH DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco; 20131111 - 20131115 13 November 2013 (2013-11-13), XP050735211, Retrieved from the Internet: URL:http://www.3gpp.org/ftp/Meetings_3GPP_ SYNC/RAN/RAN1/Docs/ [retrieved on 2013-11-13]

## Description

### TECHNICAL FIELD

Certain embodiments relate, in general, to wireless communications and, more particularly, to monitoring synchronization signals in device-to-device, D2D, communications.

### BACKGROUND

Device-to-device communication is a well-known and widely used component of many existing wireless technologies, including ad hoc and cellular networks. Examples include Bluetooth and several variants of the IEEE 802.11 standards suite, such as WiFi Direct. These example systems operate in unlicensed spectrum.

Recently, the use of device-to-device (D2D) communications as an underlay to cellular networks has been proposed as a means to take advantage of the proximity of wireless devices operating within the network, while also allowing devices to operate in a controlled interference environment. In one suggested approach, D2D communications share the same spectrum as the cellular system, for example by reserving some of the cellular uplink resources for D2D communications use. However, dynamic sharing of the cellular spectrum between cellular services and D2D communications is a more likely alternative than dedicated reservation, because cellular spectrum resources are inherently scarce and because dynamic allocation provides greater network flexibility and higher spectrum efficiency.

The Third Generation Partnership Project (3GPP) refers to Network Controlled D2D as "Proximity Services" or ProSe. Efforts aimed at integrating ProSe functionality into the Long Term Evolution (LTE) specifications are underway. The ProSe Study Item (SI) recommends supporting D2D operation for wireless devices-referred to as user equipments or UEs by the 3GPP- in out of network coverage (ONC) and/or partial network coverage (PNC) scenario. In the ONC scenario, each wireless device involved in the D2D communication is outside of network coverage. In the PNC scenario, one wireless device involved in the D2D communication is outside of network coverage and another wireless device involved in the D2D communication is in network coverage. To help support synchronization in the ONC and/or PNC scenarios, wireless devices may regularly transmit synchronization signals that provide local synchronization to neighboring wireless devices.

The ProSe SI also recommends supporting inter-cell D2D scenarios, where UEs camping on possibly unsynchronized cells are able to synchronize to each other. Still further, the ProSe SI recommends that in the LTE context, D2D-capable UEs will use uplink (UL) resources for D2D communication, such as uplink spectrum in Frequency Division Duplex (FDD) cellular spectrum and uplink subframes in Time Division Duplex (TDD) cellular spectrum. Consequently, the D2D-capable UE is not expected to transmit D2D synchronization signals-denoted as D2DSS-in the downlink (DL) portion of the cellular spectrum. That restriction contrasts with network radio nodes or base stations, referred to as eNodeBs or eNBs in the 3GPP LTE context, which periodically transmit Primary Synchronization Signals, PSS, and Secondary Synchronization Signals, SSS, on the downlink.

The PSS/SSS enable UEs to perform cell search operations and to acquire initial synchronization with the cellular network. The PSS/SSS are generated based on pre-defined sequences with good correlation properties, in order to limit inter-cell interference, minimize cell identification errors, and obtain reliable synchronization. In total, 504 combinations of PSS/SSS sequences are defined in LTE and are mapped to as many cell IDs. UEs that successfully detect and identify a sync signal are thus able to identify the corresponding cell-ID, too.

To better appreciate the PSS/SSS configurations used by eNBs on the downlink in LTE networks, FIGURE 1A illustrates time positions for PSS and SSS in the case of FDD spectrum, and FIGURE IB illustrates time positions for PSS and SSS in the case of TDD spectrum. FIGURE 2 illustrates PSS generation and the resulting signal structure. FIGURE 3 illustrates SSS generation and the resulting signal structure.

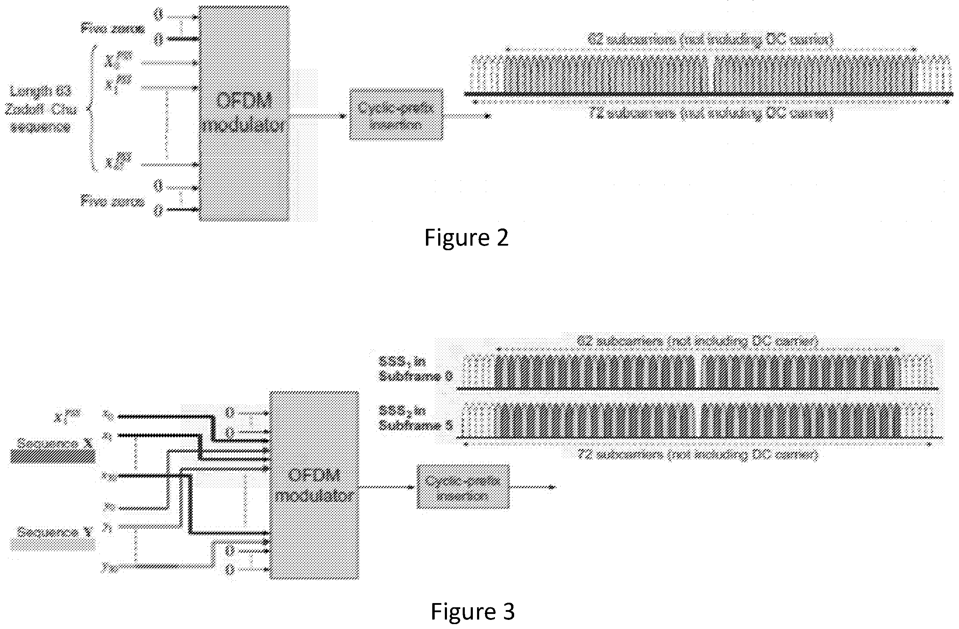

FIGURE 2 particularly highlights the formation of PSS using Zadoff-Chu sequences. These codes have zero cyclic autocorrelation at all nonzero lags. Therefore, when a Zadoff-Chu sequence is used as a synchronization code, the greatest correlation is seen at zero lag-i.e., when the ideal sequence and the received sequence are synchronized. FIGURE 3 illustrates SSS generation and the resulting signal structure. In LTE, the PSS as transmitted by an eNB on the downlink is mapped into the first 31 subcarriers on either side of the DC subcarrier, meaning that the PSS uses six resource blocks, with five reserved subcarriers on each side, as shown in the figure. Effectively, the PSS is mapped on to the middle 63 subcarriers of the OFDM resource grid at given symbol times, where "OFDM" denotes Orthogonal Frequency Division Multiplexing, in which an overall OFDM signal comprises a plurality of individual subcarriers spaced apart in frequency and where each subcarrier at each OFDM symbol time constitutes one resource element.

As FIGURE 3 illustrates, the SSSs are not generated using Zadoff-Chu sequences. Rather, the SSSs are generated using M sequences, which are pseudorandom binary sequences generated by cycling through each possible state of a shift register. The shift register length defines the sequence length. SSS generation in LTE currently relies on three M sequences of length 31.

Because of the desirable properties of the Zadoff-Chu and M sequences used to generate the PSS and SSS in LTE, and because of the preexisting investment in algorithms and associated device-side processing, there is an express interest in reusing these "legacy" PSS/SSS signal generation techniques for D2D Synchronization Signals, D2DSS. Further aspects of D2DSS were considered at the Technical Specifications Group (TSG) Radio Access Network 1 (RANI) #74bis meeting in 3GPP. TSG RAN is responsible for defining the functions, requirements and interfaces of the Universal Terrestrial Radio Access Network (UTRAN) and the Evolved UTRAN (E-UTRAN), for both FDD and TDD modes of operation. The following working assumptions were set forth in the meeting:
- Synchronization sources transmit at least a D2DSS: D2D Synchronization Signal
   *a. May be used by D2D UEs at least to derive time*/*frequency*
   *b. May (FFS) also carry the identity and*/*or type of the synchronization source(s)*
   *c. Comprises at least a PD2DSS*
      *i. PD2DSS is a ZC sequence*
      *ii. Length FFS*
   *d. May also comprise a SD2DSS*
      *i. SD2DSS is an M sequence*
      *ii. Length FFS*
- As a concept for the purpose of further discussion, without implying that such a channel will be defined, consider a Physical D2D Synchronization Channel or PD2DSCH:
   *e. May carry information including one or more of the following (For Further Study or FFS):*
   *i. Identity of synchronization source*
   *ii. Type of synchronization source*
   *iii. Resource allocation for data and*/*or control signaling*
   *iv. Data*
   *v. others FFS*
- A synchronization source is any node transmitting D2DSS
   / *A synchronization source has a physical identity PSSID*
   *g. If the synchronization source is an eNB the D2DSS is Re 1-8 PSS*/*SSS*
   *h. Note: in RAN1#73, "synchronization reference* " *therefore means the synchronization signal(s) to which Tl relates, transmitted by one or more synchronization source(s).*

Even though a range of different distributed synchronization protocols are possible, one option under consideration by the 3GPP is based on hierarchical synchronization with the possibility of multi-hop sync-relay. In short, some nodes adopt the role of synchronization masters- sometimes referred to as Synchronization Heads (SH) or as Cluster Heads (CH)-according to a distributed synchronization algorithm. If the synchronization master is a UE, it provides synchronization by transmitting D2DSS and/or PD2DSCH. If the synchronization master is an eNB, it provides synchronization by PSS/SSS and broadcast control information, such as being sent using MIB/SIB signaling, where MIB denotes "Master Information Block" and SIB denotes "System Information Block."

The synchronization master is a special case of synchronization source that acts as an independent synchronization source, i.e., it does not inherit synchronization from other nodes by use of the radio interface. UEs that are under coverage of a synchronization source may, according to predefined rules, transmit D2DSS and/or PD2DSCH themselves, according to the synchronization reference received by their synchronization source. They may also transmit at least parts of the control information received from the synchronization master by use of D2DSS and/or PD2DSCH. Such a mode of operation is referred to herein as "sync- relay" or "CP-relay."

It is also helpful to define a "synchronization reference" as a time and/or frequency reference associated with a certain synchronization signal. For example, a relayed synchronization signal is associated with the same synchronization reference as the sync signal in the first hop. US2013/077512 A1 describes a background art of method for performing direct communication between terminals by selecting synchronization information to acquire a reference time among the plurality of synchronization information parts according to a priority.
The document "Multi-hop D2D synchronization performance" (QUALCOMM INCORPORATED), 3GPP DRAFT; R1-135316, vol. RAN WG1, no. San Francisco, USA, 13 November 2013, XP050735001, see section 3, discloses a selection of synchronization source, whereby first priority is given to the number of hops and second priority is given to signal strength.
The document "Discussion on D2D Synchronization" (INTEL CORPORATION),3GPP DRAFT; R1-135113, vol. RAN WG1, no. San Francisco, USA, 13 November 2013, XP050734815, see section 2.3.1, discloses a selection of synchronization source which may be implemented in a centralized way.
The document "Synchronization Design for D2D communication" (BROADCOM CORPORATION), 3GPP DRAFT, R1-135542, vol. RAN WG1, no. San Francisco, 13 November 2013, XP050735211, discloses the working assumptions of RAN1#74bis as mentioned above in this application.

### SUMMARY

The invention is defined by the independent claims. Furthermore, embodiments of the invention are defined by the claims. Disclosed is a method that comprises detecting (105) a plurality of synchronization sources. The synchronization sources include one or more network nodes and one or more device-to-device (D2D) wireless devices. The method comprises selecting (135), based on priority, up to a maximum number (M) of the detected synchronization sources for inclusion in a monitored set that the wireless device tracks in order to maintain at least synchronization timing.

In certain embodiments, detecting (105) of the plurality of synchronization sources comprises scanning (110) one or more downlink resources for synchronization signals from the one or more network nodes and/or scanning (115) one or more uplink resources for synchronization signals from the one or more D2D wireless devices.

The method may further comprise one or more optional steps. Examples of optional steps include receiving prioritization rules from a network node and using the prioritization rules in the selection of the detected synchronization sources; discarding (145) the detected synchronization sources that are not selected for inclusion in the monitored set; and/or decoding data channels and/or control channels associated to the monitored set.

Priority can be determined based at least in part on signal strength measurements of the synchronization signals. For example, synchronization sources with stronger signal strength measurements are given priority over the synchronization sources with weaker signal strength measurements. Optionally, each signal strength measurement detected from one of the D2D wireless devices is adjusted according to a first offset and/or each signal strength measurement detected from one of the network nodes is adjusted according to a second offset.

In certain embodiments, the maximum number (M) equals the number of synchronization signals that the wireless device is capable of monitoring at a given time. In certain embodiments, up to a maximum number (N) of network node synchronization sources are selected, wherein N is less than M such that at least M - N places in the monitored set are reserved for D2D wireless device synchronization sources. In certain embodiments, up to a maximum number (K) of D2D wireless device synchronization sources are selected, wherein K is less than M such that at least M - K places in the monitored set are reserved for network node synchronization sources.

Priority can be based on other suitable criteria. For example, priority can be based at least in part on type (e.g., a sync head type has lower priority than a control plane relay type which in turn has lower priority than a network node type). As another example, priority can be based at least in part on sync hop number.

Also disclosed is wireless device operable to detect (105) a plurality of synchronization sources. The synchronization sources include one or more network nodes and one or more device-to-device (D2D) wireless devices. The wireless device selects (135), based on priority, up to a maximum number (M) of the detected synchronization sources for inclusion in a monitored set that the wireless device tracks in order to maintain at least synchronization timing. In certain embodiments, the wireless device includes a processing means for performing functionality of the wireless device. In certain embodiments, the processing means comprises a processor and a memory that contains instructions executable by said processor.

Also disclosed is a computer program product for prioritizing synchronization sources. The computer program product comprises a non-transitory computer readable storage medium having computer readable program code embodied in the medium. More specifically, the computer program product includes computer readable program code to detect (105) a plurality of synchronization sources. The synchronization sources include one or more network nodes and one or more device-to-device (D2D) wireless devices. The computer program product also includes computer readable program code to select (135), based on priority, up to a maximum number (M) of the detected synchronization sources for inclusion in a monitored set that the wireless device tracks in order to maintain at least synchronization timing.

Also disclosed is a method that comprises sending (100) prioritization rules to a wireless device (16). The prioritization rules indicate how the wireless device should select a subset of detected synchronization sources for inclusion in a monitored set in the event that the detected synchronization sources include one or more network nodes and one or more device-to-device (D2D) wireless devices.

In certain embodiments, the prioritization rules indicate to determine priority based at least in part on signal strength measurements of the synchronization signals such that the synchronization sources with stronger signal strength measurements are given priority over the synchronization sources with weaker signal strength measurements. Optionally, the prioritization rules indicate a first offset that the wireless device is to use to adjust each signal strength measurement detected from one of the D2D wireless devices and/or a second offset that the wireless device is to use to adjust each signal strength measurement detected from one of the network nodes.

In certain embodiments, the prioritization rules indicate a maximum number (N) of network node synchronization sources for inclusion in the monitored set and/or a maximum number (K) of D2D wireless device synchronization sources for inclusion in the monitored set.

In certain embodiments, the prioritization rules indicate to determine priority based at least in part on type such that a sync head type has lower priority than a control plane relay type and the control plane relay type has lower priority than a network node type.

In certain embodiments, the prioritization rules indicate to determine priority based at least in part on sync hop number.

Also disclosed is network node operable to send (100) prioritization rules to a wireless device (16). The prioritization rules indicate how the wireless device should select a subset of detected synchronization sources for inclusion in a monitored set in the event that the detected synchronization sources include one or more network nodes and one or more device-to-device (D2D) wireless devices. In certain embodiments, the network node includes a processing means for performing functionality of the network node. In certain embodiments, the processing means comprises a processor and a memory that contains instructions executable by said processor.

Also disclosed is a computer program product for facilitating the prioritization of synchronization sources. The computer program product comprises a non-transitory computer readable storage medium having computer readable program code embodied in the medium. More specifically, the computer program product includes computer readable program code to send (100) prioritization rules to a wireless device (16). The prioritization rules indicate how the wireless device should select a subset of detected synchronization sources for inclusion in a monitored set in the event that the detected synchronization sources include one or more network nodes and one or more device-to-device (D2D) wireless devices.

Some embodiments of the disclosure may provide one or more technical advantages. As an example, a technical advantage may include providing a balance between performance and complexity with respect to sync signal monitoring. For example, coverage loss tends to increase as the number of sync signals being monitored increases. Particular embodiments may allow for monitoring fewer sync signals in order to reduce coverage loss. For example, sync signals can be prioritized and higher priority sync signals may be monitored while lower priority sync signals need not be monitored. Certain embodiments may allow for prioritizing synchronization signals from network nodes and from D2D wireless devices. Some embodiments may benefit from some, none, or all of these advantages. Other technical advantages may be readily ascertained by one of ordinary skill in the art.

### BRIEF DESCRIPTION OF THE DRAWINGS

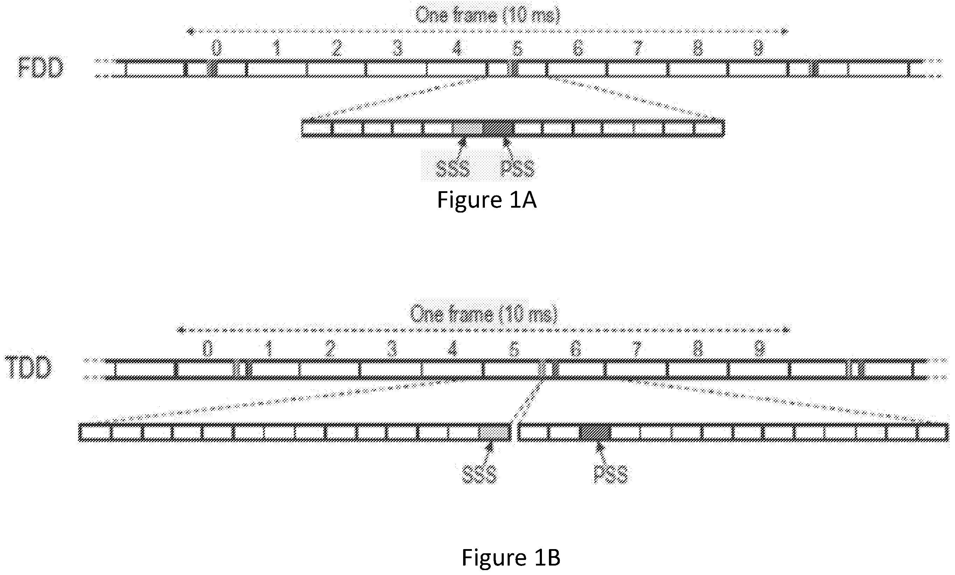

FIGURE 1A is a diagram illustrating transmission timing for primary and secondary synchronization signals transmitted on the downlink in a Long Term Evolution, LTE, network for Frequency Division Duplex, FDD, mode.
FIGURE IB is a diagram illustrating transmission timing for primary and secondary synchronization signals transmitted on the downlink in a Long Term Evolution, LTE, network for Time Division Duplex, TDD, mode.
FIGURE 2 is a diagram illustrating the generation and structure of a primary synchronization signal, as is known for network base stations operating in an LTE network.
FIGURE 3 is a diagram illustrating the generation and structure of a secondary synchronization signal, as is known for network base stations operating in an LTE network.

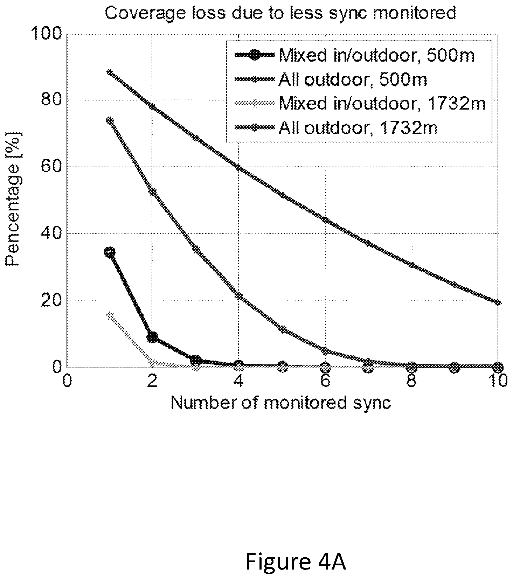

FIGURES 4A-4B are graphs each illustrating a relationship between the number of synchronization sources being monitored by a wireless device and coverage loss.

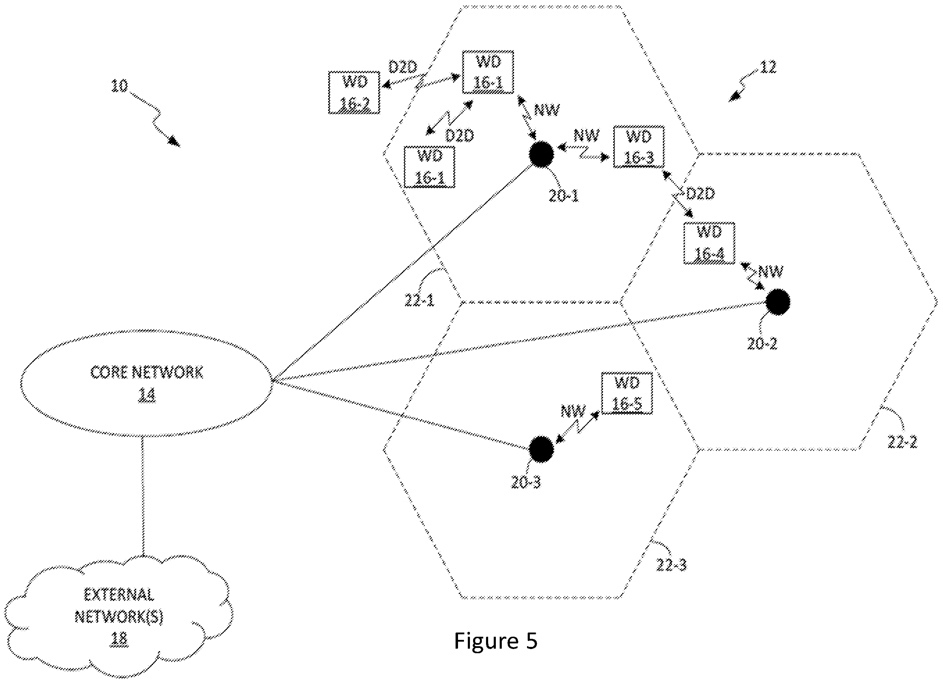

FIGURE 5 is a diagram of one embodiment of a wireless communication network, where one or more wireless devices and/or network nodes are configured according to the teachings herein.

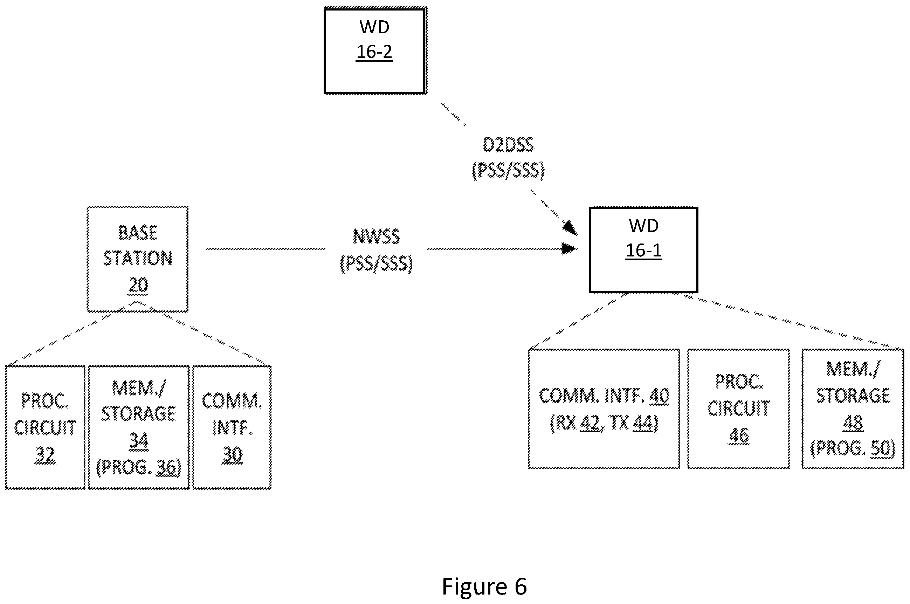

FIGURE 6 is a diagram of one embodiment of example details for a base station, such as an eNodeB in an LTE network, and a wireless device configured according to the teachings herein.

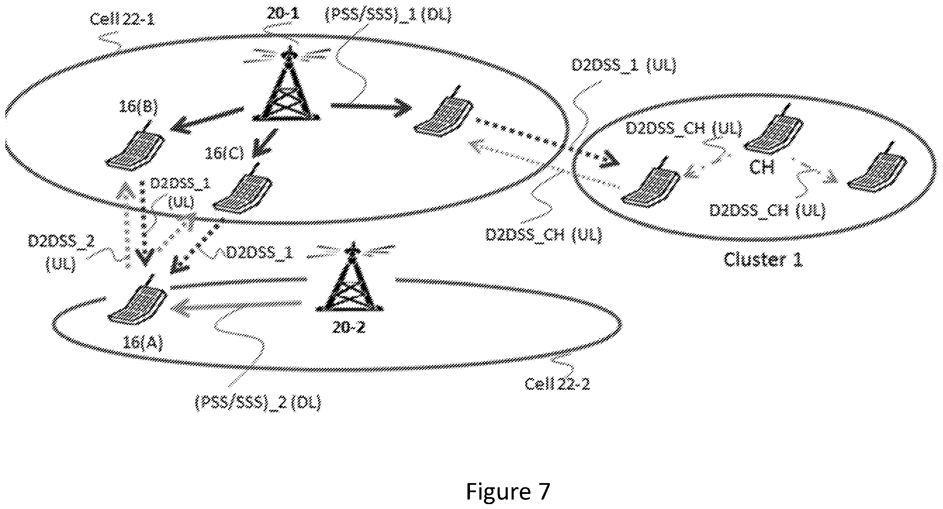

FIGURE 7 illustrates an example of synchronization signal transmission in a D2D capable network.

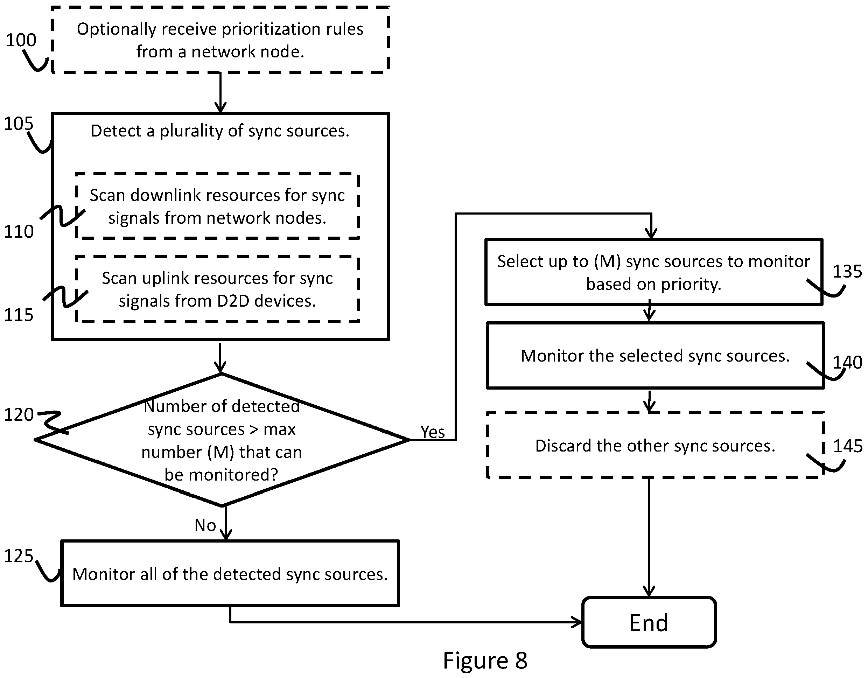

FIGURE 8 is a flow chart of one embodiment of a method for monitoring synchronization signals in device-to-device communication.

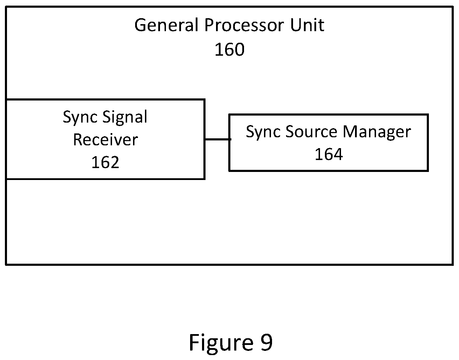

FIGURE 9 is a diagram of one embodiment of components of a wireless device configured according to the teachings herein.

### DETAILED DESCRIPTION

In a device-to-device communication network, a wireless device may detect and monitor synchronization ("sync") signals from various base stations as well as other devices (such as cluster heads and CP relays). Detecting and/or monitoring each sync signal may require processing power, memory, and/or other resources of the wireless device. As a result, there may be an upper bound (M) as to the number of sync signals that the wireless device is capable of monitoring (or detecting) at a given time. Particular embodiments may provide rules for prioritizing the sync signals so that the wireless device can determine which signals to continue monitoring and which signals to discard. For example, the wireless device may apply the prioritization rules when monitoring a number of signals close to the limit (M) of its capabilities. Particular embodiments provide techniques, methods and apparatus for sync source and/or sync reference monitoring prioritization in case the number of detected sync sources is larger than the number of sync sources/references that the wireless device is capable of monitoring.

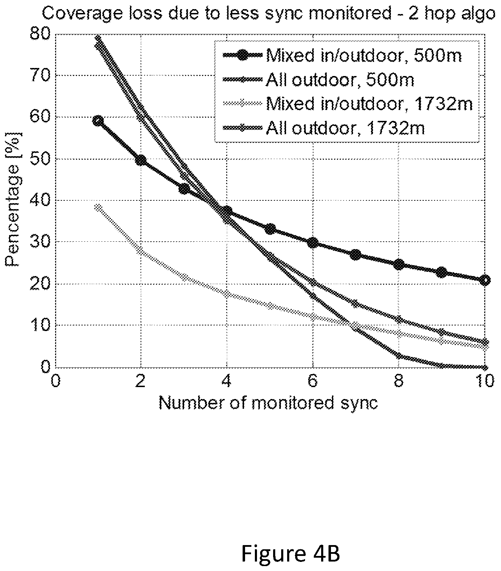

Some embodiments of the disclosure may provide one or more technical advantages. As an example, a technical advantage may include providing a balance between performance and complexity with respect to sync signal monitoring. For example, FIGURES 4A-4B show coverage loss as a function of the number N of monitored sync sources. The coverage loss is defined as the percentage of transmissions that cannot be monitored by the receiver if the receiver focuses on the N sync sources with the 'strongest' signal in terms of reference signal received power, RSRP. In particular, FIGURE 4A illustrates an in-coverage scenario and FIGURE 4B illustrates an out-of-coverage scenario.

As can be seen, coverage loss tends to increase as the number of sync signals being monitored increases. Particular embodiments may allow for monitoring fewer sync signals in order to reduce coverage loss. For example, particular embodiments may prioritize sync signals such that higher priority sync signals may be monitored and lower priority sync signals may not need to be monitored.

Some embodiments may benefit from some, none, or all of these advantages. Other technical advantages may be readily ascertained by one of ordinary skill in the art.

A device (e.g., UE) supporting D2D communication may need to monitor several synchronization signals/references, both on DL resources and UL resources. For example, network nodes (e.g., eNodeBs) may transmit synchronization signals on DL resources and devices (e.g., UEs) acting as synchronization heads or synchronization sources may transmit synchronization signals on the UL. According to system simulations, the number of synchronization sources a device can detect can be quite large. Requiring a device with D2D capability to monitor all of the detected signals may cause one or more problems.

For example, one problem may be very large device complexity due to the need to allocate digital baseband resources to monitor and track several (10's) of synchronization sources. Another problem may be high power consumption due not only to the need for large baseband chips and memory, but also due to fewer possibilities for discontinuous reception (DRX) functionality when a high number of sync sources need to be monitored. Another problem may occur if the device needs to monitor sync sources on several carriers. For example, monitoring many UL carriers at the same time may increase the device cost, power consumption, and complexity.

Particular embodiments may provide a solution to these and other problems. Particular embodiments are described with reference to the following figures, like numerals being used for like and corresponding parts of the various drawings.

FIGURE 5 illustrates one embodiment of a wireless communication network 10 that includes a Radio Access Network, RAN, 12 and a Core Network, CN, 14. The wireless communication network 10 communicatively couples wireless devices 16 to one or more external networks 18, such as the Internet or another packet data network. The diagram is simplified for ease of discussion and it will be appreciated that the wireless communication network 10 may include additional examples of any one or more of the illustrated entities and may include other entities not illustrated. For example, the CN 14 may include Mobility Management Entities or MMEs, Serving Gateways or SGWs, a Packet Gateway or PGW, and one or more other nodes, such as positioning nodes, Operations & Maintenance nodes, etc.

The RAN 12 includes a number of base stations 20-1, 20-2 and 20-3, which in the LTE context are referred to as eNBs or eNodeBs. Unless suffixes are needed for clarity, the reference number "20" will be used to refer to base stations in the singular and plural sense. Each base station 20 uses certain air interface resources-e.g., spectrum, carriers, channels, etc.-to provide service over a given area, referred to as a "cell." Accordingly, in FIGURE 5, the base station 20-1 provides a cell 22-1, the base station 20-2 provides a cell 22-2, and the base station 20-3 provides a cell 22-3. Unless suffixes are needed for clarity, the reference number "22" will be used herein to refer to cells in the singular and plural sense.

Of course, a given base station 20 may provide more than one cell 22, e.g., in the case of multi-carrier operation, and the teachings herein are not limited to arrangement of base stations 20 and cells 22 depicted in FIGURE 5. For example, the cell sizes may be adaptive or non-uniform. In the latter case, the wireless communication network 10 may comprise a heterogeneous network where one or more large cells, referred to as "macro" cells are overlaid by one or more smaller cells, referred to a "micro," "pico," or "femto," cells. These smaller cells are provided by low-power access points and may be used as service hotspots that provide higher data rate services and/or may be used to extend or fill in the service coverage provided by the macro cells. In some heterogeneous deployments, the micro cells use the same radio access technology used by the macro cells, e.g., LTE-based micro cells overlaying LTE-based macro cells.

FIGURE 6 illustrates example details for one embodiment of a base station 20 and a wireless device 16-1, which is shown in context with another wireless device 16-2. Those of ordinary skill in the art will appreciate that FIGURE 6 illustrates functional and/or physical circuit arrangements and that the base station and the wireless device 16-1 generally will include digital processing circuits (and associated memory or other computer-readable medium) for storing configuration data, operational or working data, and for storing computer program instructions. In at least some of the embodiments contemplated herein, the network-side and device-side functionality is realized at least in part through the programmatic configuration of digital processing circuitry, based on the execution by that circuitry of stored computer program instructions.

One sees from the example that the base station 20 includes a communication interface 30, a processing circuit 32, and associated memory/storage 34 (e.g., one or more types of computer-readable medium, such as a mix of volatile, working memory and non-volatile configuration and program memory or storage). The communication interface(s) 30 depend on the nature of the base station 20, but generally include a radio transceiver (e.g., pools of radio transmission, reception, and processing circuitry) for communicating with any number of wireless devices 12 in any one or more cells 22 provided by the base station 20. In that example, the communication interface(s) 30 include one or more transmitters and receivers, e.g., cellular radio circuits, along with power control circuitry and associated signal processing circuitry. Further, in the same scenario, the communication interface(s) 30 may include inter-base-station interfaces and/or backhaul or other CN communication interfaces.

The processing circuit 32 comprises, for example, digital processing circuitry that is fixed or programmed to perform network-side processing as taught herein. In one embodiment, the processing circuit 32 comprises one or more microprocessors, Digital Signal Processors (DSPs), ASIC, FPGAs, etc., which are configured according to the teachings herein. In a particular embodiment, the memory/storage 34 stores a computer program 36. In an example embodiment, the processing circuit 32 is at least partly configured according to the teachings herein, based on its execution of the computer program instructions comprising the computer program 36. In this regard, the memory/storage 34 will be understood as comprising a computer-readable medium providing non-transitory storage for the computer program 36.

Turning to the example wireless device 16-1, which may be a UE, a cellular radiotelephone (smartphone, feature phone, etc.), a tablet or laptop computer, a network adaptor, card, modem or other such interface device, a sensor, an MTC type device, or essentially a device or other apparatus that is configured for wireless communication in the wireless communication network 10. In the 3GPP context, the wireless device 16-1 is referred to as a UE, and it will be understood as including a communication interface 40, including a radiofrequency receiver 42 and a radiofrequency transmitter 44 that are configured for operation according to the air interface of the wireless communication network 10.

The wireless device 16-1 further includes a processing circuit 46, which includes or is associated with memory/storage 48. The memory/storage 48 includes, for example, one or more types of computer-readable medium, such as a mix of volatile, working memory and non-volatile configuration and program memory or other storage. Similarly, those of ordinary skill in the art will appreciate that the communication interface 40 may comprise a mix of analog and digital circuits. For example, the receiver 42 in one or more embodiments comprises a receiver front-end circuit-not explicitly shown in the diagram-that generates one or more streams of digital signal samples corresponding to antenna-received signal or signals, along with one or more receiver processing circuits-e.g., baseband digital processing circuitry and associated buffer memory-which operate on the digital samples. Example operations include linearization or other channel compensation, possibly with interference suppression, and symbol demodulation/detection and decoding, for recovering transmitted information.

At least some of the digital baseband processing for the receive (RX) signals and transmit (TX) signals received and transmitted through the communication interface 40 may be implemented in the processing circuit 46. The processing circuit 46 in this regard comprises digital processing circuitry and may be implemented as one or more microprocessors, DSPs, ASICs, FPGAs, etc. More generally, the processing circuit 46 may be implemented using fixed circuitry or programmed circuitry. In an example embodiment, the memory/storage 48 comprises a computer-readable medium that stores a computer program 50 in a non-transitory manner. The processing circuit 46 in such embodiments is at least partly configured according to the teachings herein, based on its execution of the computer program instructions comprising the computer program 50.

Note that with respect to transmit-related details herein for the transmission of D2D synchronization signals from a wireless device 16, the wireless device 16-1 shown in FIGURE 6 may be understood as having the same or similar implementation as the wireless device 16-1. In other words the processing circuit 46 and other supporting circuitry within any given wireless device 16 may be configured to carry out the synchronization signal receive processing taught herein and/or the synchronization signal transmit processing taught herein.

FIGURE 7 shows an example of wireless communication system in which synchronization information for D2D communication between devices 16 may be broadcasted by radio base stations 20, e.g. evolved Node's (eNodeBs or eNBs), etc. This is shown by the fully drawn, continuous arrows in FIGURE 7. Also, in the wireless communication system of FIGURE 7, synchronization information for D2D communication between devices 16 may also broadcasted by a cluster head (CH). This is shown by the dashed-dotted arrows in FIGURE 7. Furthermore, in the wireless communication system of FIGURE 7, synchronization information for D2D communication between devices 16 may also be broadcasted by devices 16 having a ProSe-capability (where ProSe stands for Proximity Services). This is shown by the dotted arrows in FIGURE 7.

The D2D scenarios may be grouped in the following categories: 1) in-network or "in coverage," INC, 2) out-of-network or "out-of-coverage," OOC, and 3) partial-network or "partial coverage," PNC. In INC scenarios, all participating devices 16 may be within network coverage. In OOC scenarios, all participating devices 16 may be outside network coverage. Finally, in PNC scenarios, some participating devices 16 may be within coverage and some participating devices 16 may be out-of-coverage. For the INC scenario, the synchronization reference is generally provided by the base station 20, e.g., an eNB. Also, the D2D resource pool (a set of resources to be used for transmission and/or reception for D2D purpose) is generally signaled by the base station 20 to indicate the resources used for D2D. For the OOC D2D scenario, the synchronization reference is generally provided by a CH and the D2D resource pool could be either broadcasted by the CH (in synchronization packet) or be pre-configured.

For an in-coverage scenario, base stations 20-1 and 20-2 may transmit sync signals (Primary Sync Signal/Secondary Sync Signal) on DL resources. The signals may use a DL carrier frequency in case of FDD system. The PSS/SSS may be associated with the Physical Cell ID, and hence Cell 22-1 and Cell 22-2 may transmit different PSS/SSS and may also be synchronization sources and synchronization masters. D2D capable wireless devices 16 connected to/camping on a respective cell 22 may in turn transmit D2D sync signals (D2DSS) associated with the respective cell (sync source/sync master). The D2DSS transmission may be made in UL resources which may be a UL carrier frequency in an FDD system.

In some embodiments, D2DSS in respective cells 22 can be transmitted at the same frequency/time, f/t, resources. For example devices 16(B) and 16(C) within cell 22-1 may relay synchronization signals to wireless device 16(A) at the same f/t resources (e.g., resources associated with cell 22-1) and wireless device 16(A) may receive the synchronization signals as a Single-Frequency Network (SFN) combination of multiple identical sync signals. That is, in such scenarios the sync reference received by wireless device 16(A) may be an SFN combination of D2DSS from wireless device 16(B) and 16(C). The D2D capable devices may monitor both DL resources for PSS/SSS from base stations 20 as well as UL resources for D2DSS from devices 16 (e.g., UEs) from other cells/public land mobile network (PLMN).

For an out-of-coverage scenario, the synchronization reference may be provided by a Cluster Head. A cluster head may, for example, be a wireless device 16 with dedicated capability providing local synchronization information, or a wireless device 16 with dedicated capability and thereby enabled to relay synchronization information from a different synchronization source. In FIGURE 7, device "CH" illustrates an example of a Cluster Head with respect to other devices within cluster 1. Device CH may broadcast the D2D resource pool, for example, on a synchronization packet, or the D2D resource pool may be pre-configured.

When a wireless device 16 is about to transmit data, it may first scan for synchronization signals from cluster heads or radio base stations. Then it has different choices. As a first example, if a synchronization signal is detected, then the data transmission timing may be derived from the detected synchronization signal and possibly may also be based on transmission resource pool information from the cluster head or base station. A wireless device 16 that has detected a synchronization source (radio base station or cluster head) may forward such synchronization information by acting as a synchronization source relay. As a second example, if no synchronization signal is detected, then wireless device 16 may initiate synchronization signal transmission and relate the data transmission to the transmitted synchronization signal.

From the above one can conclude that a D2D capable wireless device 16 may perform the following procedure for receiver and/or transmitter synchronization: 1. The ProSe (Proximity service, i.e. D2D communication) enabled wireless device 16 may regularly search for cells 22 and for D2DSS/PD2DSCH transmitted by Synchronization Source (SS) (e.g., other devices 16). In some embodiments, wireless device 16 may search for LTE cells 22 according to LTE mobility (cell search) procedures. 2. If any suitable cell 22 is found, wireless device 16 may camp on it and follow the cell synchronization (e.g., according to LTE legacy procedures) for signals transmission and reception. 3. If any suitable D2DSS/PD2DSCH transmitted by SS devices 16 are found, wireless device 16 may synchronize its receiver to some or all incoming D2DSS/PD2DSCHs and monitor them for incoming connections. For example, wireless device 16 may monitor resources associated with Scheduling Assignments. Possibly, the synchronization of D2DSS/PD2DSCH may be followed even for transmission, according to the agreed protocol.

FIGURE 8 illustrates an example of a method for monitoring synchronization signals in device-to-device communication. In some embodiments, a wireless device 16 may monitor synchronization signals according to steps illustrated in FIGURE 8.

At step 100, wireless device 16 receives prioritization rules from a network node 20. The prioritization rules indicate how wireless device 16 should select synchronization sources for inclusion in a monitored set. As an example, if the synchronization sources detected by wireless device 16 include one or more network nodes and one or more D2D wireless devices, the prioritization rules may indicate how to prioritize among the network node and D2D wireless device synchronization sources. Examples of prioritization rules are further described with respect to step 130 below. Step 100 may be optional depending on the embodiment. In certain alternative embodiments, some or all of the prioritization rules could be pre-configured in wireless device 16.

At step 105, wireless device 16 detects a plurality of synchronization sources. The synchronization sources include one or more network nodes 20 and one or more D2D wireless devices. Wireless device 16 may use any suitable technique to detect the synchronization sources. Examples of optional techniques for detecting synchronization sources are described with respect to steps 110 (where downlink resources are scanned for sync signals from network nodes) and 115 (where uplink resources are scanned for sync signals from D2D devices). One or both of steps 110 and 115 may be performed depending on the embodiment. As another example, in certain embodiments, downlink resources may be scanned for sync signals from D2D devices.

At step 110, wireless device 16 scans one or more downlink resources for synchronization signals from the one or more network nodes 20. For example, wireless device 16 may scan on DL f/t-resources, on regular basis (for instance every 40 ms) for new network nodes (e.g., search for PSS/SSS associated with base stations 20) in a cell search/cell scanning process. In some embodiments, wireless device 16 may search over several DL carrier frequencies. A new sync signal may be detected if the signal level is over a pre-determined threshold that may be defined by implementation or standard or may be received from a remote network/device control node.

At step 115, wireless device 16 scans one or more uplink resources for synchronization signals from the one or more D2D wireless devices. For example, on a regular basis wireless device 16 may also scan UL resources (TDD)/UL carrier (FDD) for new D2DSS/PD2DSCH (e.g., D2DSS/PD2DSCH associated with other devices 16, such as a Sync Head/cluster Head or CP-relay). In some embodiments the scanning is made on several UL carrier frequencies. A new sync signal may be detected if the signal level is over a pre-determined threshold that may be defined by implementation or standard or may be received from a remote network/device control node. The threshold in step 115 can be the same as the threshold in step 110, or two different thresholds can be used depending on the embodiment.

Once a new sync signal (D2DSS and/or PD2DSCH) is detected, wireless device 16 may obtain some information from the associated synchronization reference and/or synchronization source. The obtained information may consist of, e.g., the synchronization timing and/or frequency, the synchronization source identity, the synchronization reference identity, the signal strength of the sync signal, the signal quality of the sync signal, the type of synchronization signal/reference (e.g., UE, eNB, etc.), and so on.

Once the above information has been obtained, wireless device 16 determines whether to add the detected synchronization source and/or reference to a monitored set of sync references. "Monitoring" may mean that wireless device 16 needs to track and maintain synchronization timing for the sync references in the monitored set. Wireless device 16 may also need to monitor resources allocated for Scheduling assignments, Data reception and any other control information and signals possibly associated to the synchronization reference(s) or synchronization source(s). With "associated" it is meant that the signals and data/control channels are received with the same nominal synchronization timing and/or frequency as their synchronization reference/source.

In this step also some cells/sync references already detected and monitored may be dropped due to low signal strength (below a threshold), typically implying wireless device 16 could not keep track of the sync timing.

At step 120, wireless device 16 determines if the number of detected synchronization sources exceeds a maximum number (M) that can be monitored. As an example, the maximum number (M) equals the number of synchronization signals that wireless device 16 is capable of monitoring at a given time.

If at step 120 it is determined that the number of detected synchronization sources is less than the maximum number (M) that can be monitored, the method proceeds to step 125 where wireless device 16 monitors the sync for all of the detected synchronization sources. Monitoring may include keeping track of timing as well as (for D2DSS) monitoring resources associated with Scheduling Assignments, data reception and any other control information and signals possibly associated to the synchronization reference(s) or synchronization source(s). A control unit may also determine whether during some time periods wireless device 16 can go into DRX (turn off receiver) if there are no signals during that time period that need to be monitored/kept track of. The method may then end or optionally return to step 105 to detect additional resources.

However, if at step 120 it is determined that the number of detected synchronization sources exceeds the maximum number (M) of synchronization sources that can be monitored, the method proceeds to step 135 to select, based on priority, up to the maximum number (M) of synchronization sources to monitor. For example, a control unit within wireless device 16 may determine the priority according to one or more prioritization rules (such as prioritization rules received from network node 20 in step 100). Particular embodiments may include one or more of the following prioritization rules, or any other suitable prioritization rules.

As an example of a prioritization rule, wireless device 16 determines priority based at least in part on signal strength measurements of the synchronization signals. Thus, the synchronization sources with stronger signal strength measurements are given priority over the synchronization sources with weaker signal strength measurements. For example, assuming a maximum number of M, only the strongest M synchronization sources (SSs) and/or synchronization references (SRs) are monitored.

As another example of a prioritization rule, SSs/SRs may have different prioritizations depending on the associated SS/SR type. In some embodiments, wireless device 16 selects up to a maximum number (N) of network node SSs/SRs, wherein N is less than M such that at least M - N places in the monitored set are reserved for D2D wireless device SSs/SRs. The N strongest network node SSs/SRs may be selected and up to M-N strongest D2D wireless device SSs/SRs may be selected for inclusion in the monitored set.

In addition, or in the alternative, in some embodiments, wireless device 16 selects up to a maximum number (K) of D2D wireless device SSs/SRs, wherein K is less than M such that at least M - K places in the monitored set are reserved for network node SSs/SRs. The K strongest D2D wireless device SSs/SRs may be selected and up to M-K strongest D2D wireless device SSs/SRs may be selected for inclusion in the monitored set.

In some embodiments, the signal strength evaluations may also be modified based on SS/SR specific offsets. For example, a signal strength measurement detected from a network node may be adjusted according to a network node offset and/or a signal strength measurement detected from a D2D wireless device may be adjusted according to a D2D wireless device offset. The offset can be defined by standard, pre-configured, or received from a network node/ CH/SH (i.e., controlling node), for example, in a prioritization rule.

Any suitable values may be used for the network node offset and the D2D wireless device offset. As one example, suppose the network node offset is 2 dB and the D2D wireless device offset is 0 dB. If wireless device 16 initially measures the same signal strength from a network node X and from a D2D wireless device Y, network node X may be considered to have a stronger signal strength measurement after applying the 2 dB network node offset. Thus, in the example, network node X would be given priority over D2D wireless device Y.

As another example of a prioritization rule, wireless device 16 determines priority based at least in part on type of SS/SR, such as eNB/cell, Sync Head/cluster Head, CP-relay, etc. For instance start remove Sync Heads, then CP relays, then eNBs until max number M is reached. That is, a sync head type may have lower priority than a control plane relay type and the control plane relay type may have lower priority than a network node type in certain embodiments.

As another example of a prioritization rule, wireless device 16 determines priority based at least in part on sync hop number. For example, wireless device 16 removes SS(s) corresponding to more than, say N hops, or from largest hop number until the maximum number (M) is reached. One example is that a one hop CP relay may have lower priority than the sync source (e.g., cell) it relays the CP for.

As another example of a prioritization rule, wireless device 16 determines priority based at least in part on historical information. Thus, a historically more reliable synchronization source can receive higher priority than a historically less reliable synchronization source (or a synchronization source without a history). In some embodiments, an SS/SR may be included or excluded from the monitored set based on the amount of earlier communication sessions that wireless device 16 associates with such SS/SR. In some embodiments, a synchronization source presently in a communication session with wireless device 16 may be given higher priority than a synchronization source that is not presently in a communication session with wireless device 16.

As another example of a prioritization rule, wireless device 16 may use information indicating that a third wireless device has signaled that it is switching to that SS/SR. For example, a UE may have previously signaled its intention to switch to SS/SR X. Therefore, such information may be considered when prioritizing SS/SR X in the monitored set.

As another example of a prioritization rule, wireless device 16 may use sync information giving an indication of the importance of the sync source relative to other sync sources. The priority indicator can be an absolute number, for example, wherein a higher number corresponds to a higher priority and a lower number to a lower priority. Any alternative mappings between a priority indicator and a priority that enable comparisons of priority between different sync sources can be foreseen.

As other examples, the priority can also be related to the sync source type and/or the sync source situation. For example, a power supply status associated with a sync source may be used. Thus, a sync source with a reliable power supply may be associated with a higher priority compared to a sync source on battery power supply. Similarly, the power supply status may also affect the priority, such that a sync source with worse power supply status will have lower priority than a sync source with more favorable power supply status.

As another example of a prioritization rule, a life length indicating how long wireless device 16 has been monitoring that sync source may be used to prioritize the sync source. If the sync source has a long life length, it tends to suggest that the sync source is relatively reliable. Thus, a sync source with a longer life length may be given higher priority than a sync source with a shorter life length.

As another example of a prioritization rule, wireless device 16 may use a mobility criterion indicating whether wireless device 16 is moving toward or away from that synchronization source. For example, cells/SSs detected to be moving away from wireless device 16 are discarded even if the signal strength still makes it possible to track timing. It may be determined that a cell/SS is moving away from wireless device 16 if the signal strength decreases by a certain amount between two measurements or decreases below a certain threshold.

As another example of a prioritization rule, wireless device 16 may use a frequency offset between a candidate SS/SR (e.g., one of the detected SSs/SRs that is being prioritized) and other SSs/SRs (e.g., other detected SSs/SRs or existing SSs/SRs in the monitored set). If a candidate SS/SR has a large frequency offset from the other SSs/SRs, it may indicate that monitoring of the candidate SS/SR would likely be less reliable, so the candidate SS/SR may be assigned lower priority.

As another example of a prioritization rule, wireless device 16 may use the radio access technology (RAT) of an SS/SR to prioritize that SS/SR. In some embodiments, the priority may change depending on the numbers or RATs/LTE/other cells being tracked (for mobility measurements).

As another example of a prioritization rule, wireless device 16 may use the carrier associated with an SS/SR to prioritize that SS/SR. That is, some carriers may be assigned lower priority than other carriers. Wireless device 16 may start to discard monitoring SS/SR on low priority carriers until the max number (M) is reached (e.g., M may be the maximum number according to wireless device 16's capabilities). Wireless device 16 may prioritize the carriers using information received from a network node or CH, PLMN information, information in a subscriber identification module (SIM) card, or other suitable information. In some embodiments, the priority may change depending on the number of D2D carriers being tracked.

Any other suitable prioritization rules or combinations of prioritization rules may be used to select one or more synchronization signals to remove from the set of synchronization signals for monitoring.

The prioritization rules/principles above may be pre-configured, broadcasted by the synchronization source, configured by the serving cell/controlling node, or any suitable combination of the preceding (e.g., partly pre-configured, party broadcasted by the synchronization source, and/or partly configured by the serving cell/controlling node). In some embodiments, the information can be: (1) broadcasted as part of the synchronization signal broadcast, for instance in D2DSS, (2) broadcasted as part of a regular broadcast message from the transmitting node/synchronization source/controlling node/cell, for instance in PD2DSCH, (3) broadcasted at a t/f resource as indicated by a scheduling assignment, and/or (4) sent via dedicated signaling from a controlling node.

In some embodiments, the capability of wireless device 16 may not only be a max total number but also a max number on say DL (or UL) carrier/resource. For instance, the max number may be 10 in total, but the max number may be 6 on a respective UL/DL carrier. Hence in a scenario where 7 SS/SRs are detected on one UL carrier, and 2 eNBs on one DL carriers (9 in total), wireless device 16 may only track 6 on the UL and the two eNBs in the DL, and hence 8 in total. The prioritization of SS/SR to monitor may be done according to prioritization rules as described above.

In some embodiments, the capability of wireless device 16 may correspond to a max number N of SS/SRs that it can monitor, while it is capable of evaluating at least one candidate SS/SR. Evaluating a candidate SS/SR may imply that wireless device 16 retrieves less information from an SS/SR compared to a monitored SS/SR, but enough in order to evaluate the prioritization rules/principles. For example wireless device 16 may only scan for D2DSS of candidate SS/SR. For example, if wireless device 16 monitors N number of SS/SRs, and detects a candidate SS/SR, the prioritization rules/principles above may lead to a determination that the candidate SS/SR is more favorable compared to any of the monitored SS/SRs. In that case, wireless device 16 may replace a monitored SS/SR with the candidate SS/SR.

At step 140, wireless device 16 monitors the sync for prioritized cells/SS in the monitored set. Monitoring here may mean keeping track of timing as well as (for D2DSS) monitoring resources associated with Scheduling Assignments and any other signals and control/data channels. A control unit of wireless device 16 may also determine whether during some time periods wireless device 16 can go into DRX (turn off receiver) if there is no signals that need to be monitored/kept track of during that time period. At optional step 145, wireless device 16 discards SSs/SRs that were not selected for inclusion in the monitored set. The method may then end or optionally return to step 105 to detect sync sources so that the monitored set may be updated, if needed.

Thus, in some embodiments, a wireless device 16 may determine synchronization signals to monitor in a device-to-device communication network. For example, wireless device 16 may detect a new synchronization signal and add the new synchronization signal to a set of synchronization signals for monitoring. Wireless device 16 may determine whether a number of synchronization signals in the set exceeds a maximum number of signals that the device is capable of monitoring. If the number of synchronization signals in the set exceeds the maximum number, wireless device 16 may select one or more synchronization signals to remove from the set based on one or more prioritization rules. Wireless device 16 may then remove the selected synchronization signal(s) from the set.

To detect the new synchronization signal, wireless device 16 may scan for a synchronization signal having a signal strength above a threshold. The new synchronization signal may be transmitted by any suitable node of the wireless communication network, such as a network node/base station 20 or a device-to-device node (e.g., another wireless device 16 configured for device-to-device communication, such as a cluster head or a CP relay).

A synchronization signal may be either an original synchronization signal or a relayed synchronization signal. An original synchronization signal may refer to a signal received directly from a source of the signal (e.g., a parent node). A relayed synchronization signal may refer to a signal received indirectly via a relay node. As an example, a relay node (such as another wireless device 16) may detect an original synchronization signal from an originating node (such as a network node/base station 20) and may relay that synchronization signal to wireless device 16 as a relayed synchronization signal. In some embodiments, synchronization signal may include information indicating if it has been relayed and a number of times that it has been re-relayed. The number of times the synchronization signal has been relayed/re-relayed may indicate a number of hops between wireless device 16 and the origin of the synchronization signal.

Examples of synchronization signals include source synchronization signals and reference synchronization signals. There may be a one to one correlation between source synchronization signals and source nodes (e.g., each source node provides a source synchronization signal). There could potentially be a one to many correlation between reference synchronization signals and reference nodes (e.g., signals from multiple reference nodes may be combined to yield a reference synchronization signal, as in SFN combination).

Wireless device 16 may determine the maximum number of synchronization signals that it is capable of monitoring in any suitable manner. For example, the maximum number may be defined by a standard or may be pre-configured based on characteristics of wireless device 16 (such as total processing power, memory, or other resources). Or, the maximum number of synchronization signals that wireless device 16 is capable of monitoring may be determined dynamically. For example, if wireless device 16 is performing complex functions, it may have less processing power, memory, or other resources available to monitor synchronization signals. Accordingly, the maximum number of synchronization signals that wireless device 16 may be capable of monitoring may be relatively low. If, however, wireless device 16 does not need as much processing power, memory, or other resources for other functions, wireless device 16 may be able to use more resources to monitor synchronization signals. Accordingly, the maximum number of synchronization signals that wireless device 16 may be capable of monitoring may increase. In some embodiments, the maximum number may refer to either a maximum number of source synchronization signals or a maximum number of reference synchronization signals that wireless device 16 is capable of monitoring, or it may be generic (e.g., maximum source and/or reference signals).

Wireless device 16 may apply any suitable prioritization rules to determine which synchronization signal(s) to remove from the set of synchronization signals for monitoring. The prioritization rules may be used to prioritize the synchronization signals from highest priority to lowest priority, and wireless device 16 may select to remove the lowest priority synchronization signal from the set. As an example, a prioritization rule may indicate to remove a synchronization signal having the lowest signal strength. As another example, a prioritization rule may indicate to give a first synchronization signal received from a first type of node (such as an eNB) higher priority than a second synchronization signal received from a second type of node (such as another wireless device 16).

In some embodiments, wireless device 16 may apply a combination of prioritization rules. For example, a rule may include a signal strength offset amount based on the type of node that provides the synchronization signal. So, wireless device 16 may give a first synchronization signal received from a first type of node higher priority than a second synchronization signal received from a second type of node if the signal strength associated with the first synchronization signal plus the offset amount exceeds the signal strength associated with the second synchronization signal. However, if the signal strength associated with the first synchronization signal plus the offset amount fails to exceed the signal strength associated with the second synchronization signal, wireless device may give higher priority to the second synchronization signal.

Wireless device 16 may also use changes in signal strength to prioritize the synchronization signals. For example, a prioritization rule may assign lower priority to a synchronization signal that has decreased by a pre-determined amount or that has decreased below a pre-determined threshold. If the signal strength is decreasing, it may suggest that wireless device 16 is moving away from the node providing the synchronization signal such that the particular synchronization signal may be less reliable in the future.

As another example of a prioritization rule, if wireless device 16 has communicated with a node that provides a first synchronization signal more recently than wireless device 16 has communicated with a node that provides a second synchronization signal, the prioritization rule may indicate to provide higher priority to the first synchronization signal. If wireless device 16 has had some previous communication with the node that provides the first synchronization signal and no previous communication with the node that provides the second synchronization signal it suggests that wireless device 16 has communicated with the first node more recently.

Another example of a prioritization rule may determine priority according to a total monitoring time associated with the synchronization signal. For example, a synchronization signal that wireless device 16 has been monitoring for a long time may be more stable and therefore may be more important/higher priority than a synchronization signal that wireless device 16 has been monitoring for a short time. Accordingly, wireless device 16 may assign a first synchronization signal associated with a longer total monitoring time higher priority than a second synchronization signal associated with a shorter total monitoring time.

Prioritization rules could also give higher priority to synchronization signals received from primary sources, such as a primary carrier or a primary radio access technology, and lower priority to secondary sources, such as a secondary carrier or secondary radio access technology. For example, a primary carrier (such as band 14 in some embodiments) could be given higher priority than a secondary carrier (such as band 13 or band 2 in some embodiments). As another example, a primary radio access technology (such as LTE) could be given higher priority than a secondary radio access technology (such as WLAN). In some embodiments, wireless device 16 may determine whether a particular carrier or radio access technology corresponds to a primary or secondary source based on configuration information, such as information in a Subscriber Identity Module (SIM) card of wireless device 16.

The prioritization rules regarding primary and secondary sources could be configured to be dynamic. For example, if wireless device 16 is only monitoring 1 synchronization signal on the primary carrier (or primary radio access technology), that synchronization signal may be given higher priority than a synchronization signal on the secondary carrier (or secondary radio access technology). However, if wireless device 16 is already monitoring some threshold number of signals on the primary carrier (or the primary radio access technology), wireless device 16 may not need to give the primary carrier (or primary radio access technology) higher priority. For example, if the set of synchronization signals for monitoring includes a number of synchronization signals received from primary sources greater than a primary source threshold X and/or a number of synchronization signals received from secondary sources less than a secondary source threshold Y, wireless device 16 may give higher priority to the secondary source.

Similarly, prioritization rules may put a first limit on the number of synchronization signals that may be monitored from a first carrier and a second limit on the number of synchronization signals that may be monitored from a second carrier. For example, the maximum number of synchronization signals that wireless device 16 is capable of monitoring may be 10 in some embodiments. However, a prioritization rule could specify that wireless device 16 may monitor no more than X synchronization signals on the first carrier, such as the uplink carrier, and no more than Y synchronization signals on the second carrier, such as the downlink carrier. So, even if the total number of synchronization signals in the set for monitoring is less than 10 (wireless device 16's maximum capability in the example), wireless device 16 may still remove one of the synchronization signals associated with the first carrier from the set if the number of synchronization signals being monitored on the first carrier exceeds X. In addition, in some embodiments, a prioritization rule may indicate a maximum number of synchronization signals that wireless device 16 may detect. The maximum number of synchronization signals that wireless device 16 may detect may be determined relative to a number of synchronization signals that wireless device 16 is currently monitoring in some embodiments.

Another example of a prioritization rule may be to assign priority based on a number of relay points or hops between an originating node and wireless device 16. Wireless device 16 may assign higher priority to synchronization signals associated with fewer relay points. In some embodiments, wireless device 16 may determine the number of relay points based on information broadcast together with the synchronization signal. As an example, the number of relay points may be broadcast over the D2DSS or PD2DSCH. Other information that may be broadcast could include node type information (such as a type corresponding to either an eNB or a UE) or situational information (such as whether the node is on a power supply or a battery and what the battery level is). Thus, a prioritization rule may assign higher priority to a synchronization signal associated with a more reliable power source and lower priority to a synchronization signal associated with a less reliable power source. For example, a power supply may be given higher priority than a high battery charge and a high battery charge may be given higher priority than a low battery charge. In other embodiments, the number of relay points, the node type information, and/or the situational information might not be broadcast in a message or otherwise indicated with the synchronization signal itself.

FIGURE 9 is a diagram of one embodiment of components of a wireless device 16. In particular, FIGURE 9 illustrates a general processor unit 160 comprising a sync signal receiver 162 and a sync source manager 164. Sync signal receiver 162 may detect synchronization signals from one or more network nodes and one or more device-to-device (D2D) wireless devices. For example, sync signal receiver 162 may scan DL and/or UL resources for synchronization signals from network nodes and/or D2D wireless devices. Sync source manager 164 may use the sync signals received by sync signal receiver 162 to detect synchronization sources. Sync source manager 164 then selects, based on priority, up to a maximum number (M) of the detected synchronization sources for inclusion in a monitored set and monitors the selected synchronization sources. In certain embodiments, general processor unit 160 may be implemented in the processing circuit 46 described with respect to FIGURE 6.

In some embodiments, a computer program product may be used to perform any of the methods disclosed herein. As an example, a computer program product for prioritizing synchronization sources may comprises a non-transitory computer readable storage medium having computer readable program code embodied in the medium. The computer readable program code comprises computer readable program code to detect (105) a plurality of synchronization sources. The synchronization sources include one or more network nodes and one or more device-to-device (D2D) wireless devices. The computer readable program code also comprises computer readable program code to select (135), based on priority, up to a maximum number (M) of the detected synchronization sources for inclusion in a monitored set that the wireless device tracks in order to maintain at least synchronization timing.

In some embodiments, the maximum number (M) equals the number of synchronization signals that the wireless device is capable of monitoring at a given time. Optionally, the computer program product comprises computer readable code to select up to a maximum number (N) of network node synchronization sources, wherein N is less than M such that at least M - N places in the monitored set are reserved for D2D wireless device synchronization sources. Optionally, the computer program product comprises computer readable code to select up to a maximum number (K) of D2D wireless device synchronization sources, wherein K is less than M such that at least M - K places in the monitored set are reserved for network node synchronization sources.

To detect (105) the plurality of synchronization sources, the computer program product may also comprise computer readable program code to scan (110) one or more downlink resources for synchronization signals from the one or more network nodes and/or computer readable program code to scan one or more uplink resources for synchronization signals from the one or more D2D wireless devices.

In some embodiments, the computer program product includes computer readable program code to decode data channels and/or control channels associated to the monitored set. In some embodiments, the computer program product includes computer readable program code to discard (145) the detected synchronization sources that are not selected for inclusion in the monitored set. In some embodiments, the computer program product includes computer readable program code to receive prioritization rules from a network node and use the prioritization rules in the selection of the detected synchronization sources.

In some embodiments, the computer program product comprises computer readable program code to determine priority based at least in part on signal strength measurements of the synchronization signals such that the synchronization sources with stronger signal strength measurements are given priority over the synchronization sources with weaker signal strength measurements. Optionally, for each signal strength measurement detected from one of the D2D wireless devices, the computer program product comprises computer readable code to adjust the signal strength measurement according to a first offset. Optionally, for each signal strength measurement detected from one of the network nodes, the computer program product comprises computer readable code to adjust the signal strength measurement according to a second offset.

In addition, or in the alternative, certain embodiments of the computer program product may include computer readable code to prioritize the synchronization sources according to one or more other criteria. For example, priority can be based at least in part on type (e.g., sync head type has lower priority than a control plane relay type and the control plane relay type has lower priority than a network node type). As another example, priority can be based at least in part on sync hop number.

Although certain examples have been provided, in addition (or in the alternative), the computer readable program code may prioritize the synchronization sources according to any suitable prioritization principles, including any of the prioritization principles disclosed herein.

Also disclosed is a computer program product for facilitating the prioritization of synchronization sources. The computer program product comprises a non-transitory computer readable storage medium having computer readable program code embodied in the medium. The computer readable program code comprises computer readable program code to send (100) prioritization rules to a wireless device (16). The prioritization rules indicating how the wireless device should select a subset of detected synchronization sources for inclusion in a monitored set in the event that the detected synchronization sources include one or more network nodes and one or more device-to-device (D2D) wireless devices.

As an example, certain prioritization rules indicate to determine priority based at least in part on signal strength measurements of the synchronization signals such that the synchronization sources with stronger signal strength measurements are given priority over the synchronization sources with weaker signal strength measurements. Optionally, the prioritization rules indicate a first offset that the wireless device is to use to adjust each signal strength measurement detected from one of the D2D wireless devices and/or a second offset that the wireless device is to use to adjust each signal strength measurement detected from one of the network nodes. As another example, certain prioritization rules indicate a maximum number (N) of network node synchronization sources for inclusion in the monitored set and/or a maximum number (K) of D2D wireless device synchronization sources for inclusion in the monitored set. As yet another example, certain prioritization rules indicate to determine priority based at least in part on type such that a sync head type has lower priority than a control plane relay type and the control plane relay type has lower priority than a network node type. As a further example, certain prioritization rules indicate to determine priority based at least in part on sync hop number.

Although certain examples have been provided, in addition (or in the alternative), the computer readable program code may send prioritization rules that use any suitable prioritization principles, including any of the prioritization principles disclosed herein.

For ease of presentation, certain examples above describe that D2D links use uplink resources, such as uplink PRBs (Physical Resource Blocks) in an FDD or uplink time slots in an a cellular TDD system, but the main ideas would carry over to cases in which D2D communications take place in DL spectrum as well. For example, D2D communication entities using an LTE Direct link may reuse the same physical resource blocks (PRB) (=time/frequency resources) as used for cellular communications either in the downlink or in the uplink or both. The reuse of radio resources in a controlled fashion can lead to the increase of spectral efficiency at the expense of some increase of the intra-cell interference. D2D communicating entities may typically use UL resources such as UL PRBs or UL time slots, but conceptually it is possible that D2D (LTE Direct) communications takes place in the cellular DL spectrum or in DL time slots. In this case, D2DSS and PD2DSCh monitoring may be done on the DL carrier.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set. As used in this document, the number of synchronization sources "M" is distinct from the "M sequences" used to generate an SSS. That is, the use of the letter M is not intended to require a relationship between these two concepts.

Modifications, additions, or omissions may be made to the methods disclosed herein without departing from the scope of the invention. The methods may include more, fewer, or other steps. Additionally, steps may be performed in any suitable order.

Although this disclosure has been described in terms of certain embodiments, alterations and permutations of the embodiments will be apparent to those skilled in the art. Although some embodiments have been described with reference to certain radio access technologies, any suitable radio access technology (RAT) or combination of radio access technologies may be used, such as long term evolution (LTE), LTE-Advanced, UMTS, HSPA, GSM, cdma2000, WiMax, WiFi, etc. For example, the invention is described assuming a LTE cellular system supporting D2D communication (or Proximity Service) both inside and outside a network node/base station coverage (or controlling node, Cluster Head or Sync Head coverage), but the disclosure is also applicable to other present and future standards where cellular communication and D2D communication is possible. Accordingly, the above description of the embodiments does not constrain this disclosure. Other changes, substitutions, and alterations are possible without departing from the the scope of the invention being defined by the appended claims.

## Claims

1. A method in a network node (20), comprising:
sending (100) prioritization rules to a wireless device (16), the prioritization rules indicating how the wireless device should select a subset of detected synchronization sources for inclusion in a monitored set in the event that the detected synchronization sources include one or more network nodes and one or more device-to-device, D2D, wireless devices.

2. The method of claim 1, wherein the prioritization rules indicate to determine priority based at least in part on signal strength measurements of the synchronization signals such that the synchronization sources with stronger signal strength measurements are given priority over the synchronization sources with weaker signal strength measurements.

3. The method of claim 2, wherein the prioritization rules indicate a first offset that the wireless device is to use to adjust each signal strength measurement detected from one of the D2D wireless devices; wherein the first offset is used for a D2D wireless device and defined by a standard, predefined, or received from the network node or a controlling node.

4. The method of any of claims 2-3, wherein the prioritization rules indicate a second offset that the wireless device is to use to adjust each signal strength measurement detected from one of the network nodes; wherein the second offset is used for a network node and defined by a standard, predefined, or received from the network node or a controlling node.

5. The method of any of claims 1-4, wherein the prioritization rules indicate a maximum number (N) of network node synchronization sources for inclusion in the monitored set.

6. The method of any of claims 1-5, wherein the prioritization rules indicate a maximum number (K) of D2D wireless device synchronization sources for inclusion in the monitored set.

7. The method of any of claims 1-6, wherein the prioritization rules indicate to determine priority based at least in part on type such that a sync head type, transmitting a Device to Device Synchronization Signal, D2DSS and/ or Physical D2D Synchronization Channel, PD2DSCH, has lower priority than a control plane relay type, transmitting the D2DSS and/or PD2DSCH, and the control plane relay type has lower priority than a network node type, transmitting a Primary Sync Signal/Secondary Sync Signal, PSS/SSS, the control plane relay being adapted to transmit at least parts of control information received from the synchronization master.

8. The method of any of claims 1-7, wherein the prioritization rules indicate to determine priority based at least in part on sync hop number.

9. A network node (20) **characterized in that** the network node comprises processing means being operable to:
send (100) prioritization rules to a wireless device (16), the prioritization rules indicating how the wireless device should select a subset of detected synchronization sources for inclusion in a monitored set in the event that the detected synchronization sources include one or more network nodes and one or more device-to-device, D2D, wireless devices.

10. The network node of claim 9, wherein the prioritization rules indicate to determine priority based at least in part on signal strength measurements of the synchronization signals such that the synchronization sources with stronger signal strength measurements are given priority over the synchronization sources with weaker signal strength measurements.

11. The network node of any of claims 9-10, wherein the prioritization rules indicate a first offset that the wireless device is to use to adjust each signal strength measurement detected from one of the D2D wireless devices; wherein the first offset is used for a D2D wireless device and defined by a standard, predefined, or received from a network node/controlling node.

12. The network node of any of claims 9-11, wherein the prioritization rules indicate a second offset that the wireless device is to use to adjust each signal strength measurement detected from one of the network nodes; wherein the second offset is used for a network node and defined by a standard, predefined, or received from the network node or a controlling node.

13. The network node of any of claims 9-12, wherein the prioritization rules indicate a maximum number (N) of network node synchronization sources for inclusion in the monitored set.

14. The network node of any of claims 9-13, wherein the prioritization rules indicate a maximum number (K) of D2D wireless device synchronization sources for inclusion in the monitored set.

15. The network node of any of claims 9-14, wherein the prioritization rules indicate to determine priority based at least in part on type such that a sync head type, transmitting a Device to Device Synchronization Signal, D2DSS and/ or Physical D2D Synchronization Channel, PD2DSCH, has lower priority than a control plane relay type, transmitting the D2DSS and/or PD2DSCH, and the control plane relay type has lower priority than a network node type, transmitting a Primary Sync Signal/Secondary Sync Signal, PSS/SSS, the control plane relay being adapted to transmit at least parts of control information received from the synchronization master.

## Patentansprüche

1. Verfahren in einem Netzknoten (20), umfassend:
Senden (100) von Priorisierungsregeln an eine drahtlose Vorrichtung (16), wobei die Priorisierungsregeln angeben, wie die drahtlose Vorrichtung eine Teilmenge von erkannten Synchronisationsquellen zur Aufnahme in eine überwachte Menge auswählen soll, für den Fall, dass die erkannten Synchronisationsquellen einen oder mehrere Netzknoten und eine oder mehrere drahtlose Vorrichtung-zu-Vorrichtung Vorrichtungen, D2D-Vorrichtungen, einschließen.

2. Verfahren nach Anspruch 1, wobei die Priorisierungsregeln angeben, dass die Priorität zumindest teilweise basierend auf Signalstärkemessungen der Synchronisationssignale bestimmt werden soll, sodass den Synchronisationsquellen mit stärkeren Signalstärkemessungen Priorität gegenüber den Synchronisationsquellen mit schwächeren Signalstärkemessungen gegeben wird.

3. Verfahren nach Anspruch 2, wobei die Priorisierungsregeln einen ersten Versatz angeben, den die drahtlose Vorrichtung verwenden soll, um jede Signalstärkemessung anzupassen, die von einer der drahtlosen D2D-Vorrichtungen erkannt wird; wobei der erste Versatz für eine drahtlose D2D-Vorrichtung verwendet wird und durch einen Standard definiert, vordefiniert oder von dem Netzknoten oder einem Steuerknoten empfangen wird.

4. Verfahren nach einem der Ansprüche 2-3, wobei die Priorisierungsregeln einen zweiten Versatz angeben, den die drahtlose Vorrichtung verwenden soll, um jede Signalstärkemessung anzupassen, die von einem der Netzknoten erkannt wird; wobei der zweite Versatz für einen Netzknoten verwendet und durch einen Standard definiert, vordefiniert oder von dem Netzknoten oder einem Steuerknoten empfangen wird.

5. Verfahren nach einem der Ansprüche 1-4, wobei die Priorisierungsregeln eine maximale Anzahl (N) von Netzknotensynchronisationsquellen zur Aufnahme in den überwachten Satz angeben.

6. Verfahren nach einem der Ansprüche 1-5, wobei die Priorisierungsregeln eine maximale Anzahl (K) von D2D-Synchronisationsquellen für drahtlose Vorrichtungen zur Aufnahme in den überwachten Satz angeben.

7. Verfahren nach einem der Ansprüche 1-6, wobei die Priorisierungsregeln angeben, dass die Priorität zumindest teilweise auf dem Typ basiert, sodass ein Synchronisationskopftyp, der ein Vorrichtung-zu-Vorrichtung-Synchronisationssignal, D2DSS, überträgt, und/oder ein physischer D2D-Synchronisationskanal, PD2DSCH, eine niedrigere Priorität hat als ein Steuerebenen-Relaistyp, der das D2DSS und/oder das PD2DSCH überträgt, und der Steuerebenen-Relaistyp eine niedrigere Priorität hat als ein Netzknotentyp, der ein primäres Synchronisationssignal/sekundäres Synchronisationssignal, PSS/SSS, überträgt, wobei das Steuerebenen-Relais dazu ausgelegt ist, zumindest Teile der vom Synchronisationsmaster empfangenen Steuerinformationen zu übertragen.

8. Verfahren nach einem der Ansprüche 1-7, wobei die Priorisierungsregeln angeben, dass die Priorität zumindest teilweise basierend auf der Synchronisationssprungnummer bestimmt werden soll.

9. Netzknoten (20), **dadurch gekennzeichnet, dass** der Netzknoten Verarbeitungsmittel umfasst, die betreibbar sind zum:
Senden (100) von Priorisierungsregeln an eine drahtlose Vorrichtung (16), wobei die Priorisierungsregeln angeben, wie die drahtlose Vorrichtung eine Teilmenge von erkannten Synchronisationsquellen zur Aufnahme in eine überwachte Menge auswählen soll, für den Fall, dass die erkannten Synchronisationsquellen einen oder mehrere Netzknoten und eine oder mehrere drahtlose Vorrichtung-zu-Vorrichtung Vorrichtungen, D2D-Vorrichtungen, einschließen.

10. Netzknoten nach Anspruch 9, wobei die Priorisierungsregeln angeben, dass die Priorität zumindest teilweise basierend auf Signalstärkemessungen der Synchronisationssignale bestimmt werden soll, sodass den Synchronisationsquellen mit stärkeren Signalstärkemessungen Priorität gegenüber den Synchronisationsquellen mit schwächeren Signalstärkemessungen gegeben wird.

11. Netzknoten nach einem der Ansprüche 9-10, wobei die Priorisierungsregeln einen ersten Versatz angeben, den die drahtlose Vorrichtung verwenden soll, um jede Signalstärkemessung anzupassen, die von einer der drahtlosen D2D-Vorrichtungen erkannt wird; wobei der erste Versatz für eine drahtlose D2D-Vorrichtung verwendet und durch einen Standard definiert, vordefiniert oder von einem Netzknoten/Steuerknoten empfangen wird.

12. Netzknoten nach einem der Ansprüche 9-11, wobei die Priorisierungsregeln einen zweiten Versatz angeben, den die drahtlose Vorrichtung verwenden soll, um jede Signalstärkemessung anzupassen, die von einem der Netzknoten erkannt wird; wobei der zweite Versatz für einen Netzknoten verwendet und durch einen Standard definiert, vordefiniert oder von dem Netzknoten oder einem Steuerknoten empfangen wird.

13. Netzknoten nach einem der Ansprüche 9-12, wobei die Priorisierungsregeln eine maximale Anzahl (N) von Netzknotensynchronisationsquellen zur Aufnahme in den überwachten Satz angeben.

14. Netzknoten nach einem der Ansprüche 9-13, wobei die Priorisierungsregeln eine maximale Anzahl (K) von D2D-Synchronisationsquellen für drahtlose Vorrichtungen zur Aufnahme in den überwachten Satz angeben.

15. Netzknoten nach einem der Ansprüche 9-14, wobei die Priorisierungsregeln angeben, dass die Priorität zumindest teilweise auf dem Typ basiert, sodass ein Synchronisationskopftyp, der ein Vorrichtung-zu-Vorrichtung-Synchronisationssignal, D2DSS, überträgt, und/oder ein physischer D2D-Synchronisationskanal, PD2DSCH, eine niedrigere Priorität hat als ein Steuerebenen-Relaistyp, der das D2DSS und/oder das PD2DSCH überträgt, und der Steuerebenen-Relaistyp eine niedrigere Priorität hat als ein Netzknotentyp, der ein primäres Synchronisationssignal/sekundäres Synchronisationssignal, PSS/SSS, überträgt, wobei das Steuerebenen-Relais dazu ausgelegt ist, zumindest Teile der vom Synchronisationsmaster empfangenen Steuerinformationen zu übertragen.

## Revendications

1. Procédé dans un nœud de réseau (20), comprenant :
l'envoi (100) de règles de priorisation à un dispositif sans fil (16), les règles de priorisation indiquant la manière dont le dispositif sans fil doit sélectionner un sous-ensemble de sources de synchronisation détectées pour inclusion dans un ensemble surveillé dans l'éventualité où les sources de synchronisation détectées incluent un ou plusieurs nœuds de réseau et un ou plusieurs dispositifs sans fil de dispositif à dispositif, D2D.

2. Procédé selon la revendication 1, dans lequel les règles de priorisation donnent pour indication de déterminer une priorité sur la base au moins en partie de mesures de force de signal des signaux de synchronisation de sorte que les sources de synchronisation avec des mesures de force de signal plus fortes se voient accorder la priorité sur les sources de synchronisation avec des mesures de force de signal plus faibles.

3. Procédé selon la revendication 2, dans lequel les règles de priorisation indiquent un premier décalage que le dispositif sans fil doit utiliser pour ajuster chaque mesure de force de signal détectée depuis l'un des dispositifs sans fil D2D ; dans lequel le premier décalage est utilisé pour un dispositif sans fil D2D et défini par une norme, prédéfinie, ou reçue du nœud de réseau ou d'un nœud de commande.

4. Procédé selon l'une quelconque des revendications 2 ou 3, dans lequel les règles de priorisation indiquent un deuxième décalage que le dispositif sans fil doit utiliser pour ajuster chaque mesure de force de signal détectée depuis l'un des nœuds de réseau ; dans lequel le deuxième décalage est utilisé pour un nœud de réseau et défini par une norme, prédéfinie, ou reçue du nœud de réseau ou d'un nœud de commande.

5. Procédé selon l'une quelconque des revendications 1 à 4, dans lequel les règles de priorisation indiquent un nombre maximal (N) de sources de synchronisation de nœud de réseau pour inclusion dans l'ensemble surveillé.

6. Procédé selon l'une quelconque des revendications 1 à 5, dans lequel les règles de priorisation indiquent un nombre maximal (K) de sources de synchronisation de dispositif sans fil D2D pour inclusion dans l'ensemble surveillé.

7. Procédé selon l'une quelconque des revendications 1 à 6, dans lequel les règles de priorisation donnent pour indication de déterminer une priorité sur la base au moins en partie du type de telle sorte qu'un type tête de synchronisation, transmettant un signal de synchronisation de dispositif à dispositif, D2DSS et/ou un canal de synchronisation D2D physique, PD2DSCH, a une priorité plus basse qu'un type relais de plan de commande, transmettant le D2DSS et/ou le PD2DSCH, et le type relais de plan de commande a une priorité plus basse qu'un type nœud de réseau, transmettant un signal de synchronisation primaire/signal de synchronisation secondaire, PSS/SSS, le relais de plan de commande étant conçu pour transmettre au moins des parties d'informations de commande reçues du maître de synchronisation.

8. Procédé selon l'une quelconque des revendications 1 à 7, dans lequel les règles de priorisation donnent pour indication de déterminer une priorité sur la base au moins en partie d'un nombre de sauts de synchronisation.

9. Nœud de réseau (20) **caractérisé en ce que** le nœud de réseau comprend un moyen de traitement en mesure de :
envoyer (100) des règles de priorisation à un dispositif sans fil (16), les règles de priorisation indiquant la manière dont le dispositif sans fil doit sélectionner un sous-ensemble de sources de synchronisation détectées pour inclusion dans un ensemble surveillé dans l'éventualité où les sources de synchronisation détectées incluent un ou plusieurs nœuds de réseau et un ou plusieurs dispositifs sans fil de dispositif à dispositif, D2D.

10. Nœud de réseau selon la revendication 9, dans lequel les règles de priorisation donnent pour indication de déterminer une priorité sur la base au moins en partie de mesures de force de signal des signaux de synchronisation de sorte que les sources de synchronisation avec des mesures de force de signal plus fortes se voient accorder la priorité sur les sources de synchronisation avec des mesures de force de signal plus faibles.

11. Nœud de réseau selon l'une quelconque des revendications 9 ou 10, dans lequel les règles de priorisation indiquent un premier décalage que le dispositif sans fil doit utiliser pour ajuster chaque mesure de force de signal détectée depuis l'un des dispositifs sans fil D2D ; dans lequel le premier décalage est utilisé pour un dispositif sans fil D2D et défini par une norme, prédéfinie, ou reçue d'un nœud de réseau/nœud de commande.

12. Nœud de réseau selon l'une quelconque des revendications 9 à 11, dans lequel les règles de priorisation indiquent un deuxième décalage que le dispositif sans fil doit utiliser pour ajuster chaque mesure de force de signal détectée depuis l'un des nœuds de réseau ; dans lequel le deuxième décalage est utilisé pour un nœud de réseau et défini par une norme, prédéfinie, ou reçue du nœud de réseau ou d'un nœud de commande.

13. Nœud de réseau selon l'une quelconque des revendications 9 à 12, dans lequel les règles de priorisation indiquent un nombre maximal (N) de sources de synchronisation de nœud de réseau pour inclusion dans l'ensemble surveillé.

14. Nœud de réseau selon l'une quelconque des revendications 9 à 13, dans lequel les règles de priorisation indiquent un nombre maximal (K) de sources de synchronisation de dispositif sans fil D2D pour inclusion dans l'ensemble surveillé.

15. Nœud de réseau selon l'une quelconque des revendications 9 à 14, dans lequel les règles de priorisation donnent pour indication de déterminer une priorité sur la base au moins en partie du type de telle sorte qu'un type tête de synchronisation, transmettant un signal de synchronisation de dispositif à dispositif, D2DSS et/ou un canal de synchronisation D2D physique, PD2DSCH, a une priorité plus basse qu'un type relais de plan de commande, transmettant le D2DSS et/ou le PD2DSCH, et le type relais de plan de commande a une priorité plus basse qu'un type nœud de réseau, transmettant un signal de synchronisation primaire/signal de synchronisation secondaire, PSS/SSS, le relais de plan de commande étant conçu pour transmettre au moins des parties d'informations de commande reçues du maître de synchronisation.
